# EUROPÄISCHE PATENTANMELDUNG

(11) **EP 0 972 495 A1**
(43) Veröffentlichungstag der Anmeldung: **19.01.2000**
(21) Anmeldenummer: 99810560.5
(22) Anmeldetag: 25.06.1999
(51) Int. Cl.: A61C 3/06

(54) **Verfahren zur Herstellung von Dental-Werkzeugen für die Bearbeitung von Oberflächen**

(30) Priorität: 13.07.1998 CH 149798
(71) Anmelder: Identoflex AG, 6331 Hünenberg (CH)
(72) Erfinder: Gozzi, Guido, Dr., 8305 Dietlikon (CH); Rupf, Heinrich, 9470 Buchs (CH); Von Weissenfluh, Beat A., 6925 Gentilino (CH)
(74) Vertreter: AMMANN PATENTANWAELTE AG BERN

(57) **Zusammenfassung**

Beim Verfahren zur Herstellung von Dental-Werkzeugen für die Bearbeitung von Oberflächen wird auf die Spindel (2) des Werkzeugs zuerst ein als Trägerschicht (3) dienender Gummikern und dann auf darauf die mit abrasiven Körnern versehene Abrasivschicht (4) aufgebracht.

Bei einem weiteren Verfahren zur Herstellung von Dental-Werkzeugen für die unterschiedliche Bearbeitung von Oberflächen, insbesondere für das Grobschleifen, Finieren und Polieren, wird für die abrasiven Teile der Werkzeuge je nach Art der Bearbeitung eine gummielastische Masse mit einem unterschiedlichen Härtegrad verwendet und in die gummielastische Masse dieser Teile abrasive Körner gleicher Grösse eingebettet.

Bei einem bevorzugten Verfahren werden die beiden genannten Verfahren kombiniert um Dental-Werkzeuge zu ergeben, die entweder eine Kombination einer Trägerschicht und darauf mehrere Abrasivteile mit unterschiedlichen Härtegraden und gleicher Korngrösse der Abrasivkörner aufweisen oder aus einem Satz von Werkzeugen bestehen, der je ein Werkzeug mit einer Trägerschicht und einer Abrasivschicht aufweist, die verschiedene Härtegrade der Einbettungsmasse, jedoch die gleiche Korngrösse für die Abrasivkörner aufweist.

## Beschreibung

Die vorliegende Erfindung bezieht sich auf ein Verfahren zur Herstellung von Dental-Werkzeugen für die Bearbeitung von Oberflächen gemäss dem Oberbegriff der unabhängigen Patentansprüche 1 und 2 sowie auf nach dem Verfahren hergestellte Dental-Werkzeuge. Die vorliegende Erfindung bezieht sich insbesondere auf Dental-Werkzeuge zum Finieren und Polieren von Keramik- oder Kompositflächen von Zahnfüllungen.

Im allgemeinen verwendet man zum Grobbearbeiten, Finieren oder Polieren von Oberflächen von Keramik- oder Kompositfüllungen Dental-Werkzeuge, im nachfolgenden der Einfachheit halber Gummipolierer oder Polierer genannt, die eine gummielastische Masse aufweisen, in der abrasive Körner eingebettet sind. Je nach der Feinheit der Körnung werden dann diese Werkzeuge für die Grobbearbeitung, das Finieren oder Polieren verwendet. Dabei schwanken die Korngrössen von etwa 320 µ bis hinunter zu 5 µ.

In der Regel wird die Anwendung von Gummipolierern zwischen Grobausarbeitung und abschliessender Hochglanzpolitur empfohlen, wobei bei Metallen damit sogar Hochglanz erreichbar ist. Diese Gummipolierer haben verschiedene typische Formen, die durch die anatomische Strukturen und spezifische Morphologie der zu polierenden Zähne und Ersatzstücke wie Füllungen bestimmt werden. Diese typischen Formen werden in wiederum typischen Verschleissmustern abgenutzt. Ueberschreitet die Abnutzung ein bestimmtes Mass, ist der Polierer nicht mehr zu gebrauchen und wird durch einen neuen ersetzt. Die benutzten Anteile stellen je nach typischer Form einen grösseren oder kleineren Teil des Gesamtpolierers dar.

Die abrasiven Eigenschaften der Polierer werden durch das Einbetten von abrasiven Körnern in die gummielastische Masse erzielt. Bei sämtlichen Werkzeugen gemäss Stand der Technik wird die ganze Poliermasse mit Abrasivkörnern gefüllt ohne Rücksicht darauf, welche Anteile des Polierers typischerweise benutzt werden und welche nicht. Insbesondere bei der Verwendung von Diamantkörnern führt dies zu relativ teuren Werkzeugen.

Es ist von diesem bekannten Stand der Technik ausgehend eine erste Aufgabe der Erfindung, ein Verfahren zur Herstellung von Dental-Werkzeugen und nach dem Verfahren hergestellte Dental-Werkzeuge anzugeben, die eine wesentliche Einsparung gegenüber vorbekannten Verfahren und Werkzeugen bietet. Ein solches Verfahren ist im unabhängigen Anspruch 1 definiert.

Gummipolierer haben diverse typische Formen, die durch die anatomischen Strukturen und spezifische Morphologie der zu polierenden Zähne und Ersatzstücken bestimmt werden. Die unterschiedliche Abrasivität von Gummipolierern für zahnärztliche und zahntechnische Zwecke wird gemäss dem Stand der Technik durch unterschiedlich grosse Abrasionskörner bestimmt. Dieses Prinzip funktioniert aber nur, wenn die Gummimatrix der Polierer eine minimale Härte aufweist. Die Abtragungstiefe der Abrasionskörner ist dann proportional zu ihrer Grösse. Daher haben Gummipolierer nach dem Stand der Technik immer eine Mindesthärte, was vor allem für den zahnärztlichen klinischen Einsatz Nachteile bringt. Die Reibung des Dental-Werkzeugs am Zahn und damit dessen Erwärmung ist unangenehm hoch, die Anschmiegung an die Oberfläche ist ungenügend und der Abrieb der Polierer ist erhöht.

Es ist von diesem bekannten Stand der Technik ausgehend eine weitere Aufgabe der Erfindung, das Verfahren zur Herstellung von Dental-Werkzeugen zu vereinfachen und die geschilderten Nachteile zu vermeiden. Das Verfahren, das diese Aufgabe löst, ist im unabhängigen Patentanspruch 2 definiert.

Der Lösung gemäss Patentanspruch 2 liegt die Erkenntnis zu Grunde, dass für das Abtragungsverhalten von Abrasivkörnern weniger die Korngrösse als die Unterlage, d. h. die gummielastische Masse, in denen die Körner eingebettet sind, massgeblich ist.

Die Erfindung wird im folgenden anhand einer Zeichnung von zwei Ausführungsbeispielen näher erläutert.
- Figur 1: zeigt im Schnitt und schematisch den Aufbau eines Dental-Werkzeugs, das gemäss dem Verfahren nach Anspruch 1 hergestellt wurde,
- Figur 2: zeigt im Schnitt und schematisch ein weiteres Dental-Werkzeug, das nach einem Verfahren nach dem Patentanspruch 2 hergestellt wurde, und
- Figur 3: zeigt eine Ausführungsvariante zu Figur 2.

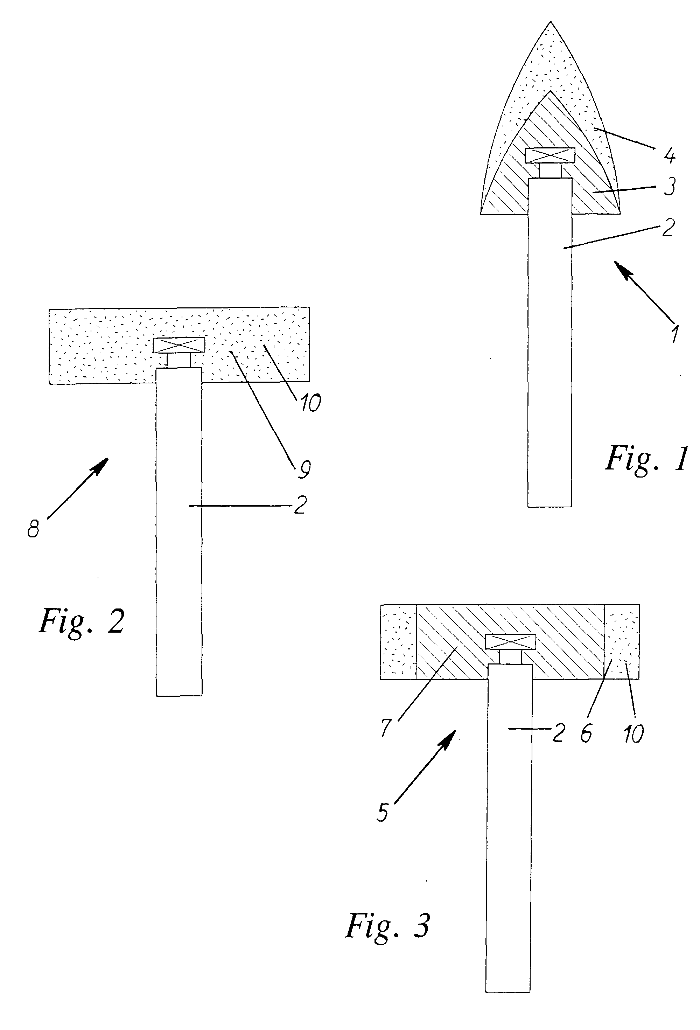

In Figur 1 erkennt man ein Dental-Werkzeug 1, das eine an sich bekannte Spindel 2 aufweist, um es an ein Handstück eines Dentalapparates anzuschliessen. Um die Spindel 2 ist in Abweichung von vorbekannten Werkzeugen eine Trägerschicht 3 angeordnet, auf die die eigentliche Abrasivschicht 4 aufgebracht ist. Es ist einleuchtend, dass bei diesem Dental-Werkzeug nur die Abrasivschicht 4 zu abrasiven Zwecken zum Einsatz kommt, während dies für die Trägerschicht 3 nicht zutrifft. Es ist daher möglich, erheblich an Diamantkörnern oder auch anderen Abrasivkörnern zu sparen und somit nur eine relativ dünne Schicht, die Abrasivschicht, damit zu beschicken.

Es ist von Vorteil, wenn auch nicht zwingend, wenn die Trägerschicht aus dem gleichen gummielastischen Material wie die Abrasivschicht besteht, da in diesem Falle die Bindung zwischen den Schichten problemlos ist. Als gummielastisches Material kommen alle für diese Anwendung bekannten elastomeren Kunststoffe in Frage, die hier der Einfachheit halber Gummi genannt werden. Bei der Trägerschicht handelt es sich daher um einen Gummikern.

Die Herstellung erfolgt wie oben beschrieben, d. h. dass auf die Spindel zuerst die Trägerschicht 3, ein nicht gefüllter Gummikern, aufgespritzt wird und in einem zweiten Schritt die dünnere Abrasivschicht 4 aufgebracht wird, beispielsweise mittels einer Formenpresse. Dies ist auch bei dem scheibenförmigen Werkzeug 5 gemäss Figur 3 möglich, bei dem die Abrasivschicht 6 ein relativ dünner Ring ist, der auf die Trägerschicht 7, den Gummikern, beispielsweise auch mittels einer Formenpresse, aufgebracht wurde, während der Gummikern auf die Spindel 8 aufgespritzt worden ist.

Es ist selbstverständlich, dass Form und Art der Werkzeuge nicht auf diejenige gemäss den Figuren 1 oder 3 beschränkt ist, sondern das Herstellungsverfahren Dental-Werkzeuge sämtlicher Formen umfasst.

Bei der Herstellung von Werkzeugen mit unterschiedlichen Abrasiveigenschaften wurde erkannt, dass im Falle, dass die Elastizität des Gummis eine Schwelle überschreitet, ein anderes Prinzip als das eingangs erwähnte Prinzip der minimalen Härte Platz greift. Die Korngrösse wird dann unerheblich, weil die Körner durch die Weichheit der Gummimasse der polierenden Aktion ausweichen können. Der Abrasionseffekt nimmt dann generell ab und wird zu einem polierenden Effekt, der nicht von der Abrasionskorngrösse abhängig ist, sondern von der Elastizität des korntragenden gummielastischen Materials.

Aus dieser Erkenntnis ergibt sich, dass der Politurgrad mit ein und demselben Korn variiert werden kann, insbesondere wird dann die Einbettung unterschiedlicher Abrasivitäten in den gleichen Polierern ermöglicht, indem unterschiedlich elastische Teile verwendet werden, unter Beibehaltung der Korngrösse. Es können auch separate Polierer nach diesem Prinzip gestaltet, d. h. abgestuft werden.

In Figur 2 ist dies schematisch und symbolisch dadurch angedeutet, dass das Dental-Werkzeug 8 eine als Abrasivschicht dienende Einbettungsmasse 9 aufweist, in die Abrasivkörner, beispielsweise Diamantkörner 10, gleicher Grösse eingebettet sind.

Das Werkzeug kann aber auch wie in Figur 3 dargestellt aufgebaut sein, d. h., dass die Abrasivschicht 6 die gleichen Abrasivkörner 10 wie in Figur 2 aufweist, jedoch auf einer Trägerschicht 7, dem Gummikern, aufgespritzt ist.

Dabei können die verschiedenen Werkzeuge gemäss Figur 2 oder 3 stets die gleichen Körner 10 aufweisen, jedoch verschiedene Einbettungsmassen, um den Politurgrad zu bestimmen oder aber die Form gemäss dem Werkzeug nach Figur 1 aufweisen mit einer Abrasivschicht 4, die einerseits Körner gleicher Grösse, aber verschiedene Einbettungsmassen mit unterschiedlichen Härtegraden aufweisen kann.

Aus obiger Beschreibung geht hervor, dass die Dental-Werkzeuge einerseits mit einem Abrasivkörner sparenden Verfahren hergestellt sein können, d. h. aus einer Trägerschicht und einer Abrasivschicht bestehen, wobei die Abrasivschicht im ersten Fall je nach Anwendung Körner verschiedener Grösse, jedoch im wesentlichen eine Einbettmasse gleicher minimaler Härte aufweist, andererseits können die Werkzeuge so beschaffen sein, dass sie nur eine Abrasivschicht aufweisen, die auf die Spindel aufgebracht worden ist, wobei die Abrasivschicht jeweils Körner gleicher Grösse, jedoch Einbettmassen verschiedener Härtegrade, aufweisen kann, wobei dies entweder unterschiedliche Werkzeuge oder Werkzeuge mit verschiedenen Schichten mit Einbettmassen verschiedener Härtegrade sein können.

Die obigen Verfahren erlauben es jedoch auch, beide Vorteile in sich zu vereinigen, wie dies beim Werkzeug gemäss Figur 3 veranschaulicht ist, das eine abrasionskörnerfreie Trägerschicht 7 aufweist und darüber eine oder mehrere Abrasionschichten 6 mit Körnern gleicher Grössen, jedoch Einbettmassen verschiedener Härte. Wie bereits erwähnt, können die Dental-Werkzeuge gemäss Figur 3 oder gemäss Figur 1 auch von jeder anderen beliebigen Form sein.

Bei der Herstellung ist es möglich, sowohl für die Trägerschicht als auch für die verschiedenen Härtegrade der Einbettungsmasse unterschiedliche Einfärbungen zu verwenden.

## Patentansprüche

1. Verfahren zur Herstellung von Dental-Werkzeugen für die Bearbeitung von Oberflächen, insbesondere mit einer gummielastischen Masse, in der die abrasiven Körner eingelagert sind, dadurch gekennzeichnet, dass auf die Spindel des Werkzeugs zuerst eine Trägerschicht (3, 7) aufgebracht wird und dann auf diese Trägerschicht die mit abrasiven Körnern versehene Abrasivschicht (4, 6) aufgebracht wird.

2. Verfahren zur Herstellung von Dental-Werkzeugen für die unterschiedliche Bearbeitung von Oberflächen, insbesondere für das Grobschleifen, Finieren und Polieren, mit mindestens einem Abrasivteil, in dem die abrasiven Körner eingelagert sind, dadurch gekennzeichnet, dass für die abrasiven Teile der Werkzeuge je nach Art der Bearbeitung eine gummielastischen Masse (9) mit unterschiedlichem Härtegrad verwendet wird und in die gummielastische Masse dieser Teile abrasive Körner (10) gleicher Grösse eingebettet werden.

3. Verfahren nach Anspruch 2, dadurch gekennzeichnet, dass die abrasiven Teile mit Einbettmassen mit unterschiedlichen Härtegraden und gleichen Abrasiv-Körnern entweder auf einem Dental-Werkzeug oder auf verschiedenen Dental-Werkzeugen angebracht werden.

4. Verfahren nach Anspruch 1 und 2 oder 3.

5. Nach dem Verfahren nach Anspruch 1 hergestelltes Dental-Werkzeug, gekennzeichnet durch eine an der Spindel (2) aufgebrachte, abrasivkörnerfreie Trägerschicht (3, 7) und einer darauf aufgebrachten Abrasivschicht (4, 6).

6. Nach dem Verfahren von Anspruch 3 hergestelltes Dental-Werkzeug mit mehreren Abrasivteilen, dadurch gekennzeichnet, dass die Abrasivteile (4, 6) Einbettmassen mit verschiedenen Härtegraden und gleichen Abrasivkörnern (10) aufweisen.

7. Nach dem Verfahren von Anspruch 3 hergestellter Satz von Dental-Werkzeugen mit verschiedenen Abrasiv-Eigenschaften, dadurch gekennzeichnet, dass das Abrasivteil der Dental-Werkzeuge eines Satzes je eine Einbettmasse mit verschiedenem Härtegrad und gleichen Abrasivkörnern aufweist.

8. Dental-Werkzeug nach den Ansprüchen 5 und 6 oder 7.
